# EUROPEAN PATENT SPECIFICATION

(11) **EP 1 898 062 B1**
(45) Date of publication and mention of the grant of the patent: **04.05.2011**
(21) Application number: 07016501.4
(22) Date of filing: 22.08.2007
(51) Int. Cl.: F02D 41/14, F01N 13/14, B62K 19/30, B60K 13/04

(54) **Motorcycle with exhaust gas sensor**
Motorrad mit Abgassensor
Motocyclette avec capteur d'échappement

(30) Priority: 05.09.2006 JP 2006240840
(43) Date of publication of application: 12.03.2008
(73) Proprietor: Yamaha Hatsudoki Kabushiki Kaisha, Shizuoka-ken Shizuoka 438-8501 (JP)
(72) Inventor: Arai, Nobuhiro, Iwata-shi, Shizuoka-ken 438-8501 (JP)
(74) Representative: Grünecker, Kinkeldey, Stockmair & Schwanhäusser Anwaltssozietät

(56) References cited:
- JP-A- 2000 310 116
- JP-A- 2006 152 962
- JP-A- 2006 170 938
- US-A- 5 360 081

## Description

The present invention relates to a vehicle, in particular a motorcycle, with an exhaust gas sensor according to the preamble of claim 1.

Such vehicle is known from US-A-5360 081. In recent years, increasingly stricter exhaust gas restrictions have been imposed on vehicles worldwide. To cope with such restrictions, vehicles use catalysts to purify exhaust gas in the exhaust pipe. In addition, vehicles must be equipped with an exhaust gas sensor for detecting the concentration of oxygen and the concentration of unburned gas in the exhaust pipe, thereby checking the actual air-fuel ratio of the engine to control the supply of fuel.

As for the structure for arranging or attaching an exhaust gas sensor for a motorcycle, one such structure has been proposed. In the proposed structure, an exhaust gas sensor is arranged in a cylinder head of an internal combustion engine. In the cylinder head, an intake valve and an exhaust valve are arranged in a V-configuration at the top of the internal combustion engine. An exhaust port extends to curve from the axial direction of the exhaust valve in the direction opposite to the intake valve which intersects the axis of a cylinder. A downstream end of the exhaust port has a flange to which a member of an exhaust system is attached.

With this structure, the exhaust gas sensor is positioned around the flange of the exhaust port to be inclined relative to the axis of the cylinder, being located at the outside of the exhaust port. Accordingly, no large space is needed for the arrangement of the exhaust gas sensor, and no additional protector for the exhaust gas sensor is needed. (See Patent Document 1, for example.)

Another structure for arranging an exhaust gas sensor for a motorcycle has been proposed. In the motorcycle including this structure, an engine with a bottom projection, such as an oil pan, is positioned between a front wheel and a rear wheel. An exhaust pipe extends from the engine rearward through the bottom side of the bottom projection. An exhaust gas sensor is attached vertically to a sensor attachment part on the upper part of the exhaust pipe and at a position separated rearward by a certain distance from the rear of the bottom projection.

With this structure, the exhaust gas sensor can be protected by the bottom projection and the exhaust pipe against flying stones. Thus, the need for a protective cover can be obviated, effecting a reduction in cost of design and production. (See Patent Document 2, for example.)

Patent Document 1 described above is directed to the structure of arranging an exhaust gas sensor for a scooter-type motorcycle. Patent Document 2 is directed to the structure for arranging an exhaust gas sensor for a large motorcycle having an oil pan at the bottom of an engine.

The scooter-type motorcycle described in Patent Document 1 has a large cover covering the engine and parts around the engine and connected to a rider's seat. Thus, if the motorcycle only has the structure for preventing the exhaust gas sensor against stones flying from below, no additional protection against flying stones is needed for the exhaust gas sensor.

In the large motorcycle described in Patent Document 2, the exhaust gas sensor can be protected against flying stones by the bottom projection and the exhaust pipe. However, it is unsatisfactory that no consideration is given to foreign matters coming from the lateral sides.

Generally, most of the large motorcycles manufactured by Japanese motorcycle manufacturers are models shipped to Europe which are compatible with European exhaust gas restrictions stricter than Japanese ones.

Meanwhile, many motorcycles available in the Japanese market are small. Among others, on and off-road (designed for running on both paved public roads and unpaved roads or roadless ground) motorcycles have gained increasing popularity lately.

The on and off-road motorcycles must typically have a lightweight structure. For this reason, covers and other similar parts are made as small as possible or otherwise omitted other than minimum required.

When the exhaust gas sensor is attached to the exhaust pipe of the on and off-road motorcycle, the attachment of a protective cover causes problems related to weight which contradicts requirements above.

In addition, the on and off-road motorcycle may often fall. Thus, protective measures must be taken against damages to various parts of the motorcycle in case of a fall.

Exhaust gas sensors, especially O₂ sensors, generally use oxygen extracted from the atmosphere to detect exhaust gas components in the exhaust pipe (detect the air-fuel ratio). Thus, if an ambient air inlet of the exhaust gas sensor is covered with foreign matters such as mud, ambient air will not be introduced smoothly, and thus the detection function of the sensor will be significantly damaged.

The on and off-road motorcycles may run on bad roads, such as slush, as well as in cities. Thus, the exhaust gas sensor must be protected against sprayed mud as well as flying stones.

More specifically, in the commonly available motorcycles, the protection against flying stones only aims at preventing breakage of the exhaust gas sensor. The protection against sprayed mud aims at preventing the detection function of the sensor from being reduced.
Patent Document 1: JP-A-2004-316430 ([Abstract] and FIG. 4)
Patent Document 2: JP-A-Hei 11-343895 ([Abstract] and FIG. 2)

However, the idea of protecting the exhaust gas sensor against sprayed mud as described above is not disclosed in Patent Document 1 nor Patent Document 2.

In addition, the on and off-road motorcycles often undergo a model changeover. The installation of the exhaust gas sensors will be indispensable for future new models of the one and off motorcycles.

In view of the foregoing problems, it is, therefore, an object of the present invention to provide a vehicle, in particular a motorcycle, having a structure for arranging an exhaust gas sensor in which the exhaust gas sensor can be protected against sprayed mud as well as flying stones without a dedicated protective cover, so that a vehicle body is prevented from increasing in weight.

This objective is solved in an inventive manner by a vehicle, in particular a motorcycle, comprising a main frame; an engine mounted to the main frame; an exhaust pipe connected to the engine; and an exhaust gas sensor attached to the exhaust pipe, wherein an outside of the exhaust gas sensor in a vehicle width direction is shielded by the main frame, wherein the main frame extends obliquely longitudinally of the vehicle.

Preferably, the direction in which the exhaust gas sensor is attached and the direction in which the main frame extends coincide with each other.

Further, preferably the exhaust gas sensor is attached to an upper part of the exhaust pipe.

Still further, preferably, an exhaust gas sensor attachment part of the exhaust pipe is positioned between one side of the engine and the main frame, as seen from above.

Preferably, the exhaust pipe extends longitudinally of the vehicle, the main frame extends vertically, and the exhaust gas sensor is positioned in a portion of the exhaust pipe (9) which intersects the main frame, in a side view.

Further, preferably the exhaust gas sensor is set inclined inward to the inside of a vehicle body relative to a vertical line passing through the sensor attachment part of the exhaust pipe.

According to another preferred embodiment, the vehicle further comprises a rear arm for supporting a rear wheel.

Preferably, at the main frame, a pivot shaft for pivotally supporting the rear arm is suspended, and the exhaust gas sensor is positioned above the pivot shaft,

Further, preferably a shock absorber coupling the main frame and the rear arm is provided, and wherein the exhaust gas sensor is positioned in front of the shock absorber.

According to another preferred embodiment, the vehicle further comprises a mud flap in front of a rear wheel, wherein the exhaust gas sensor is positioned in front of the mud flap.

Preferably, the exhaust gas sensor is an O₂ sensor.

In the following, the present invention is explained in greater detail with respect to several embodiments thereof in conjunction with the accompanying drawings, wherein:
- FIG. 1: is a side view illustrating the general structure of a motorcycle including a structure for arranging an exhaust gas sensor in accordance with an embodiment,
- FIG. 2: is an enlarged view of a portion in the side view of FIG. 1 focusing on the exhaust gas sensor,
- FIG. 3: is an enlarged view, as seen from above, of the side view of FIG. 1 illustrating the arrangement of a portion focusing on the exhaust gas sensor and an exhaust pipe, and
- FIG. 4: is a cross sectional view taken and seen along the arrows A-A' of FIGS. 2 and 3.

### Description of Reference Numerals:

- 1:: motorcycle
- 2:: steering shaft
- 3:: head pipe
- 4:: main frame
- 5:: rear frame
- 6:: seat
- 7:: seat rail
- 8:: side cover
- 9(9-1, 9-2,9-3):: exhaust pipe
- 10:: engine
- 11:: crankcase
- 12:: muffler
- 13:: protective cover
- 14:: protective cover
- 15:: shock absorber
- 16:: link
- 17:: pivot shaft
- 18:: rear wheel
- 19:: rear wheel support arm
- 20:: leg
- 21:: steering bracket
- 22:: front fork
- 23:: front axle
- 24:: front wheel
- 25:: exhaust gas sensor
- 26:: mud flap
- 31:: sensor attachment part
- 32:: nut
- 33:: signal wire

An embodiment will be described below with reference to the drawings.

### First Embodiment

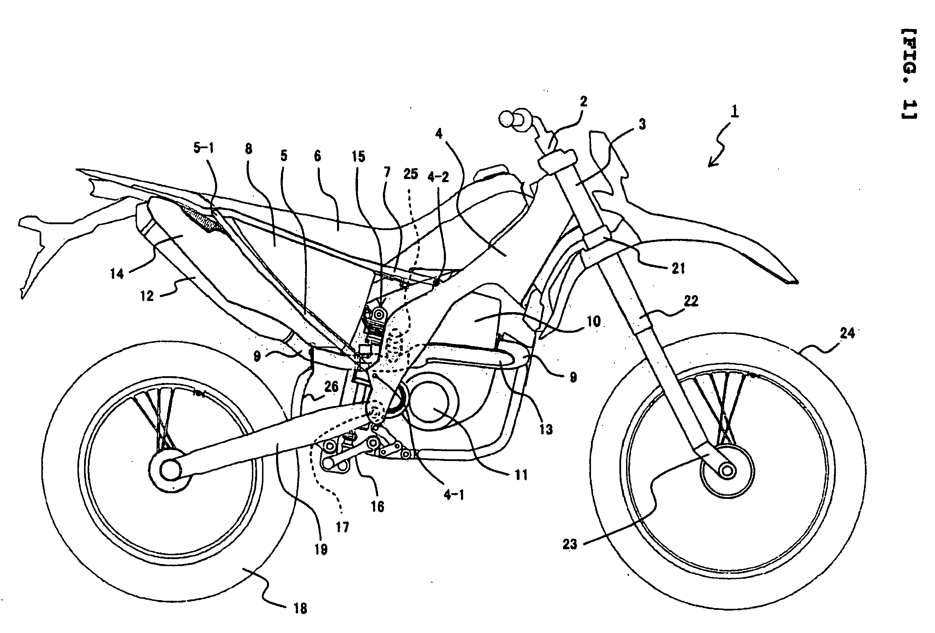

FIG. 1 is a side view illustrating the general structure of a motorcycle including a structure for arranging an exhaust gas sensor in accordance with an embodiment. A motorcycle 1 shown in FIG. 1 is an on and off-road motorcycle.

As shown in FIG. 1, the motorcycle 1 in accordance with this embodiment includes a main frame 4. The main frame 4 has a front end connected to a head pipe 3. The head pipe 3 is fitted over at least a steering shaft 2. The main frame 4 extends obliquely downward and rearward from the front end connected to the head pipe 3.

The main frame 4 has an engagement part 4-1 in proximity to a lower end. The engagement part 4-1 is engaged with a front end of a rear frame 5. The rear frame 5 extends from the front end engaged with the engagement part 4-1 obliquely upward and rearward. A rear end 5-1 of the rear frame 5 is coupled to a seat rail 7 in proximity to its rear end. The seat rail 7 supports a seat 6 thereunder.

The seat rail 7 has a front end engaged with an engagement part 4-2 in the middle of the main frame 4. The seat rail 7 extends rearward along the bottom of the seat 6. Between the seat rail 7 and the rear frame 5, there is provided a side cover 8 for covering part of the side of a vehicle body below the seat.

The motorcycle 1 has an exhaust pipe 9. The exhaust pipe 9 extends from an exhaust opening in a front part of an engine 10 to a side of the engine 10, and passes above a crankcase 11 and through the inside in the vehicle width direction of the main frame 4 and the rear frame 5, and further extends to a position at which the exhaust pipe is attached to a muffler 12.

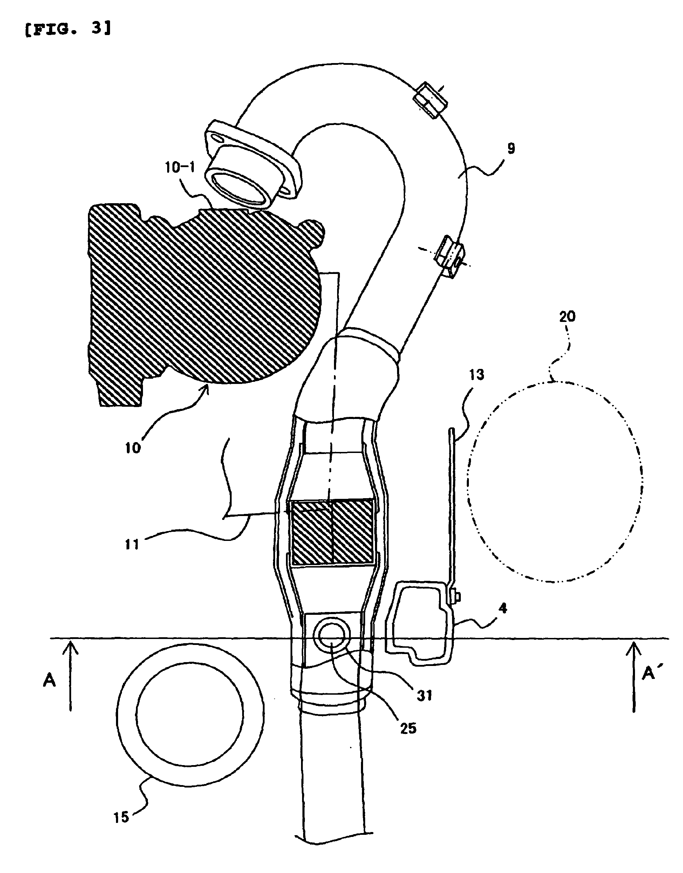

A protective cover 13 is disposed on the exhaust pipe 9 to protect rider's leg (i.e., calf) 20 (FiG. 3) against high heat from the exhaust pipe 9. The protective cover 13 extends from a rearwardly-curved part of the exhaust pipe 9 proximate to the exhaust opening located at the front of an engine to a position where the exhaust pipe 9 passes through the inside of the main frame 4.

Another protective cover 14 is attached to protect rear passenger's leg (specifically a portion from the heel to the calf) against high heat from the muffler 12. The protective cover 14 is disposed on an upper part of the muffler 12 and covers substantially one fourth in the circumferential direction of the muffler 12.

In such manner, the portion around the exhaust pipe is designed to protect rider's and rear passenger's legs from high heat.

In a central portion inside the vehicle body, a shock absorber 15 is disposed to absorb shock due to vertical vibration of the seat 6. The shock absorber 15 includes a cylinder, a spiral spring, and a piston. A lower end of the piston is engaged with a pivot shaft 17 via a plurality of links 16.

A rear wheel support arm 19 has one end supporting an axle of a rear wheel 18. The other end of the support arm 19 is engaged with the pivot shaft 17 described above at the lower end of the main frame 4.

A front fork 22 extends obliquely forward from a steering bracket 21. A lower end of the front fork 22 supports a support shaft of a front wheel 24 via a front axle 23.

In the structure of the motorcycle 1 described above, substantially all the parts other than the front wheel 24 and the rear wheel 18 are arranged in the central portion of the vehicle body in an inverse triangular configuration. It should be noted that behind the shock absorber 15 described above, a mud flap 26 is disposed between the shock absorber 15 and the rear wheel 18.

In such centralized structure of the motorcycle 1 in accordance with this embodiment, an exhaust gas sensor 25 is disposed in the exhaust pipe 9 described above at a position where the rider and the rear passenger will undergo no adverse effect of heat conduction from the exhaust pipe 9 and where the exhaust gas sensor 25 will encounter no mud or sustain no damage in case of a fall of the motorcycle 1.

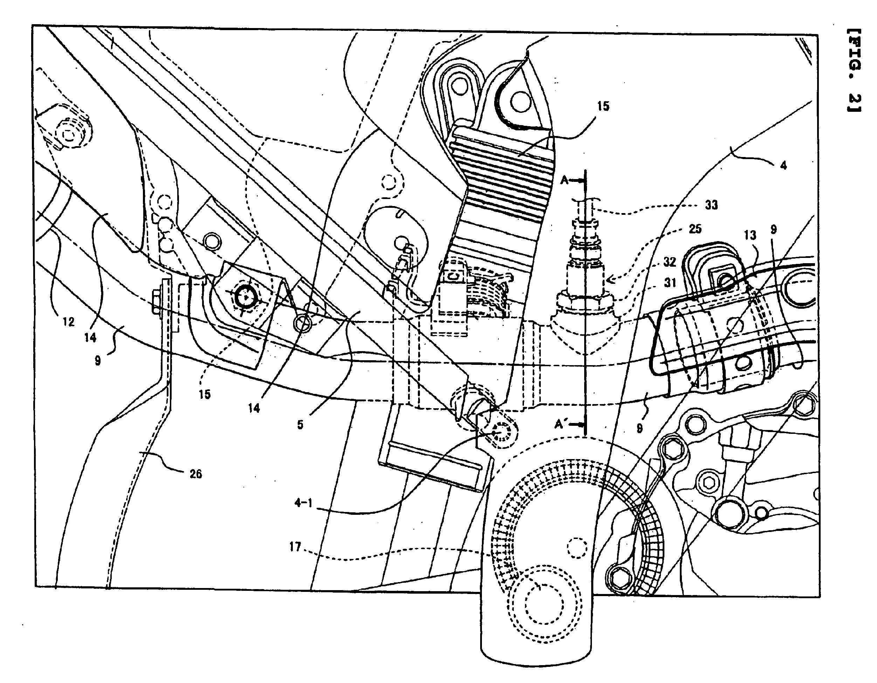

FIG. 2 is an enlarged view of a portion in the side view of FIG. 1 focusing on the exhaust gas sensor 25.

FIG. 3 is an enlarged view, as seen from above, of the side view of FIG. 1 illustrating the arrangement of a portion focusing on the exhaust gas sensor 25 and the exhaust pipe 9.

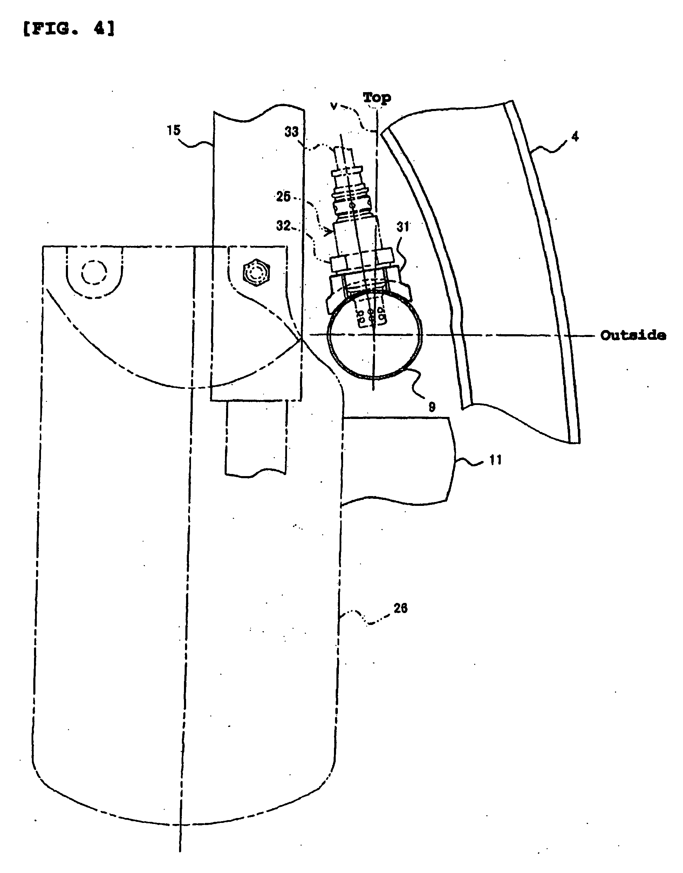

FIG. 4 is a cross sectional view taken and seen along the arrows A-A' of FIGS. 2 and 3.

Referring now to FIGS. 2, 3 and 4, description will be made of a structure for arranging an exhaust gas sensor for a motorcycle in accordance with an embodiment.

As shown in FIGS. 2 and 3, the exhaust gas sensor 25 in accordance with this embodiment is securely attached to a sensor attachment part 31 with a nut 32. The sensor attachment part 31 is formed on the upper part of the exhaust pipe 9 on the inside of the main frame 4.

The exhaust gas sensor 25 is connected to a signal wire 33 through which the detection of exhaust gas components (air-fuel ratio) is transmitted to a controller (not shown).

Based on the detection of exhaust gas components fed back from the exhaust gas sensor 25, a control unit optimizes the supply of fuel (injection amount of gasoline) to the engine 10.

As described above, the exhaust gas sensor 25 is attached to a position where the exhaust gas sensor 25 is shielded by the main frame 4 on the outside in the vehicle width direction.

The exhaust gas sensor 25 can thus be incredibly protected by the main frame 4 against stones, mud or the like flying from the lateral direction, even if no dedicated protective cover is provided.

The exhaust gas sensor 25 is positioned such that the direction in which the exhaust gas sensor 25 is attached and the direction in which the main frame 4 extends approximately coincide with each other, as shown in FIG. 2.

As a result, the entire exhaust gas sensor 25 can be incredibly protected by the main frame 4.

The exhaust gas sensor 25 is attached to the sensor attachment part 31 formed on the upper part of the exhaust gas pipe 9.

The exhaust gas pipe 9 is thus positioned so as to protect the exhaust gas sensor 25 against stones, mud or the like flying from below.

As described above, the exhaust pipe 9 is connected to an exhaust opening 10-1 of the engine 10 mounted to the main frame 4, and extends from the exhaust opening 10-1, passing by one side of the engine 10 and passing through the inside of the main frame 4. Thus, the exhaust gas sensor attachment part 31 is positioned between the one side of the engine and the main frame, as seen from above, as shown in FIG. 3.

Accordingly, the exhaust gas sensor 25 is at a position where it can be incredibly protected by the engine 10 and the main frame 4 against stones, mud or the like flying from both sides.

As shown in FIG. 2, the exhaust gas sensor 25 in accordance with this embodiment is positioned in a portion where the exhaust pipe 9 extending longitudinally of the vehicle and the main frame 4 extending vertically intersect each other.

Accordingly, the exhaust gas sensor 25 is at a position where it can be protected against stones, mud or the like flying from the lateral outside by the main frame 4.

As shown in FIG. 4, the exhaust gas sensor 25 in accordance with this embodiment is set inclined inward to the inside of the vehicle body relative to a vertical line "v" passing through the sensor attachment part 31 of the exhaust pipe 9.

Accordingly, the exhaust gas sensor 25 is at a position where it can be incredibly protected by the exhaust pipe 9 and the main frame 4 against stones, mud or the like flying from below or from the lateral outside.

As shown in FIG. 2, at the lower end of the main frame 4, the pivot shaft 17 is suspended for pivotally supporting the rear arm 19, which supports the rear wheel 18 described above. The exhaust gas sensor 25 in accordance with this embodiment is positioned above the pivot shaft 17.

Accordingly, the exhaust gas sensor 25 is at a position where it can be incredibly protected by the pivot shaft 17 against stones, mud or the like flying from below the exhaust pipe 9.

The exhaust gas sensor 25 is positioned in front of the shock absorber 15, as shown in FIGs. 1, 2 and 3.

Accordingly, the exhaust gas sensor 25 is at a position where it can be incredibly protected by the shock absorber 15 against stones, mud or the like flying from the rear wheel 18 side.

The exhaust gas sensor 25 is positioned in front of the mud flap 26 disposed in front of the rear wheel 18.

Accordingly, the exhaust gas sensor 25 is at a position where it can be incredibly protected by the mud flap 26 against stones, mud or the like flying from the rear wheel 18 side.

With the structure for arranging an exhaust gas sensor for a motorcycle in accordance with this embodiment, the exhaust gas sensor can be protected against flying stones and sprayed mud from the longitudinal, vertical and lateral directions, even though no dedicated protective cover is provided.

Therefore, the present teaching provides the structure for arranging an exhaust gas sensor in which the vehicle body is prevented from increasing in weight and the exhaust gas sensor is not easily encountered by foreign matters such as mud sprayed from the surroundings.

The description above discloses (among others) an embodiment of a motorcycle, which includes a main frame extending obliquely longitudinally of the vehicle; an engine mounted to the main frame; an exhaust pipe connected to the engine; and an exhaust gas sensor attached to the exhaust pipe, in which the exhaust gas sensor is shielded by the main frame on the outside in a vehicle width direction.

According to a further embodiment, the direction in which the exhaust gas sensor is attached and the direction in which the main frame extends coincide with each other.

According to a further embodiment, the exhaust gas sensor is attached to an upper part of the exhaust pipe. According to a further embodiment, an exhaust gas sensor attachment part of the exhaust pipe is positioned between one side of the engine and the main frame, as seen from above.

According to a further embodiment, the exhaust pipe extends longitudinally of the vehicle, the main frame extends vertically, and the exhaust gas sensor is positioned in a portion of the exhaust pipe which intersects the main frame.

According to a further embodiment, the exhaust gas sensor is set inclined inward to the inside of a vehicle body relative to a vertical line passing through the sensor attachment part of the exhaust pipe.

According to a further embodiment, the motorcycle further includes a rear arm for supporting a rear wheel, and at the main frame, a pivot shaft for pivotally supporting the rear arm is suspended, and the exhaust gas sensor is positioned above the pivot shaft.

According to a further embodiment, the motorcycle further includes: a rear arm for supporting a rear wheel; and a shock absorber coupling the main frame and the rear arm, and the exhaust gas sensor is positioned in front of the shock absorber.

According to a further embodiment, the motorcycle further includes a mud flap in front of a rear wheel, and the exhaust gas sensor is positioned in front of the mud flap. In one embodiment, the exhaust gas sensor is an O₂ sensor.

### Effect of the teaching

According to the present teaching of the above embodiments, a structure for arranging an exhaust gas sensor for an on and off-road motorcycle in which the exhaust gas sensor is protected against sprayed mud as well as flying stones without a dedicated protective cover, so that a vehicle body is prevented from increasing in weight can be provided.

The description above further discloses a particular embodiment, in order to provide a structure for arranging an exhaust gas sensor for a motorcycle in which the exhaust gas sensor can be protected against sprayed mud as well as flying stones without a dedicated protective cover, so that a vehicle body is prevented from increasing in weight, in which an exhaust gas sensor 25 is set inclined inward to the inside of a vehicle body relative to a vertical line "v" passing through a sensor attachment part 31; the sensor attachment part 31 is formed on an upper part of an exhaust pipe 9 on the inside of a main frame 4; the exhaust gas sensor 25 is positioned above a pivot shaft 17 of a seat cushion, in front of a shock absorber 15, and in front of a mud flap 26 in front of a rear wheel 18; the exhaust gas sensor 25 is protected by the exhaust pipe 9, at a lower portion of the sensor; a front portion of the exhaust gas sensor 25 is surrounded and protected by parts around handlebars 2 and parts around an engine 11; both sides of the exhaust gas sensor 25 are surrounded and protected by the main frame 4, the engine 10, the parts around the engine 10, and various parts engaging the shock absorber 15; and a rear portion of the exhaust gas sensor 25 is protected by the mud flap 26.

## Claims

1. Vehicle, in particular a motorcycle (1), comprising:
a main frame (4)
an engine (10) mounted to the main frame (4);
an exhaust pipe (9) connected to the engine (10); and
an exhaust gas sensor (25) attached to the exhaust pipe (9),
**characterized in that**
an outside of the exhaust gas sensor (25) in a vehicle width direction is shielded by the main frame (4), wherein the main frame extends obliquely longitudinally of the vehicle.

2. Vehicle according to claim 1, wherein the direction in which the exhaust gas sensor (25) is attached and the direction in which the main frame (4) extends coincide with each other.

3. Vehicle according to claim 1 or 2, wherein the exhaust gas sensor (25) is attached to an upper part of the exhaust pipe (9).

4. Vehicle according to one of the claims 1 to 3, wherein an exhaust gas sensor attachment part (31) of the exhaust pipe (9) is positioned between one side of the engine (10) and the main frame (4), as seen from above.

5. Vehicle according to claim 4, wherein the exhaust pipe (9) extends longitudinally of the vehicle, the main frame (4) extends vertically, and the exhaust gas sensor (25) is positioned in a portion of the exhaust pipe (9) which intersects the main frame (4), in a side view.

6. Vehicle according to one of the claims 1 to 5, wherein the exhaust gas sensor (25) is set inclined inward to the inside of a vehicle body relative to a vertical line (V) passing through the sensor attachment part (31) of the exhaust pipe (9).

7. Vehicle according to one of the claims 1 to 6, further comprising a rear arm (19) for supporting a rear wheel (18).

8. Vehicle according to claim 7, wherein at the main frame (4), a pivot shaft (17) for pivotally supporting the rear arm (19) is suspended, and the exhaust gas sensor (25) is positioned above the pivot shaft (17).

9. Vehicle according to claim 7 or 8, wherein a shock absorber (15) coupling the main frame (4) and the rear arm (19) is provided, and wherein the exhaust gas sensor (25) is positioned in front of the shock absorber.

10. Vehicle according to one of the claims 1 to 9, further comprising a mud flap (26) in front of a rear wheel (18), wherein the exhaust gas sensor (25) is positioned in front of the mud flap.

11. Vehicle according to one of claims 1 to 10, wherein the exhaust gas sensor (25) is an O₂ sensor.

## Patentansprüche

1. Fahrzeug, insbesondere ein Motorrad (1), aufweisend:
einen Hauptrahmen (4),
eine Brennkraftmaschine (10), montiert an dem Hauptrahmen (4);
ein Abgasrohr (9), verbunden mit dem Motor (10); und
ein Abgasrohr (9), verbunden mit der Brennkraftmaschine (10); und
einen Abgassensor (25), verbunden mit dem Abgasrohr (9),
**dadurch gekennzeichnet, dass**
eine Außenseite des Abgassensors (25) in einer Richtung der Breite des Fahrzeuges durch den Hauptrahmen (4) abgeschirmt ist, wobei sich der Hauptrahmen schräg längs des Fahrzeuges erstreckt.

2. Fahrzeug nach Anspruch 1, wobei die Richtung, in der der Abgassensor (25) verbunden ist, und die Richtung, in der sich der Hauptrahmen (4) erstreckt, miteinander übereinstimmen.

3. Fahrzeug nach Anspruch 1 oder 2, wobei der Abgassensor (25) mit einem oberen Teil des Abgasrohres (9) verbunden ist.

4. Fahrzeug nach einem der Ansprüche 1 bis 3, wobei ein Abgassensor- Befestigungsteil (31) des Abgasrohres (9), wenn von oben gesehen, zwischen einer Seite der Brennkraftmaschine (10) und dem Hauptrahmen (4) angeordnet ist.

5. Fahrzeug nach Anspruch 4, wobei sich das Abgasrohr (9) längs des Fahrzeuges erstreckt, der Hauptrahmen (4) sich vertikal erstreckt und der Abgassensor (25) in einem Abschnitt des Abgasrohres (9) positioniert ist, der, in einer Seitenansicht, den Hauptrahmen (4) schneidet.

6. Fahrzeug nach einem der Ansprüche 1 bis 5, wobei der Abgassensor (25) nach innen zu der Innenseite einer Fahrzeugkarosserie relativ zu einer vertikalen Linie (V), durch die das Abgassensor- Befestigungsteil (31) des Abgasrohres (9) hindurchgeht, geneigt ist.

7. Fahrzeug nach einem der Ansprüche 1 bis 6, außerdem einen hinteren Arm (19) zum Lagern eines Hinterrades (18) aufweisend.

8. Fahrzeug nach Anspruch 7, wobei an dem Hauptrahmen (4) eine Schwenkwelle (17) zum schwenkbaren Lagern des hinteren Arms (19) aufgehängt ist und der Abgassensor (25) oberhalb der Schwenkwelle (17) positioniert ist.

9. Fahrzeug nach Anspruch 7 oder 8, wobei ein Stoßdämpfer (15), der den Hauptrahmen (4) und den hinteren Arm (19) kuppelt, vorgesehen ist und wobei der Abgassensor (25) vor dem Stoßdämpfer positioniert ist.

10. Fahrzeug nach einem der Ansprüche 1 bis 9, außerdem aufweisend einen Schmutzfänger (26) vor einem Hinterrad (18), wobei der Abgassensor (25) vor dem Schmutzfänger positioniert ist.

11. Fahrzeug nach einem der Ansprüche 1 bis 10, wobei der Abgassensor (25) ein O₂ - Sensor ist.

## Revendications

1. véhicule, en particulier motocycle (1), comprenant :
un cadre principal (4),
un moteur (10) monté sur le cadre principal (4) ;
un tuyau d'échappement (9) relié au moteur (10) ; et
un capteur de gaz d'échappement (25) fixé au tuyau d'échappement (9),
**caractérisé en ce qu'**un côté extérieur du capteur de gaz d'échappement (25), dans le sens de la largeur du véhicule, est protégé par le cadre principal (4), ledit cadre principal étant oblique dans le sens longitudinal du véhicule.

2. véhicule selon la revendication 1, dans lequel le sens dans lequel le capteur de gaz d'échappement (25) est fixé et le sens dans lequel le cadre principal (4) s'étend coïncident.

3. véhicule selon la revendication 1 ou 2, dans lequel le capteur de gaz d'échappement (25) est fixé à une partie supérieure du tuyau d'échappement (9).

4. Véhicule selon l'une des revendications 1 à 3, dans lequel une pièce de fixation de capteur de gaz d'échappement (31) du tuyau d'échappement (9) est placée entre un côté du moteur (10) et le cadre principal (4), vue de dessus.

5. Véhicule selon la revendication 4, dans lequel le tuyau d'échappement (9) s'étend dans le sens longitudinal du véhicule, le cadre principal (4) s'étend à la verticale, et le capteur de gaz d'échappement (25) est placé dans une partie du tuyau d'échappement (9) qui coupe le cadre principal (4), vu de côté.

6. Véhicule selon l'une des revendications 1 à 5, dans lequel le capteur de gaz d'échappement (25) est incliné vers l'intérieur, en direction de l'intérieur d'un corps de véhicule, par rapport à une ligne verticale (V) qui traverse la pièce de fixation de capteur (31) du tuyau d'échappement (9).

7. Véhicule selon l'une des revendications 1 à 6, comprenant par ailleurs un bras arrière (19) pour supporter une roue arrière (18).

8. véhicule selon la revendication 7, dans lequel un pivot (17) destiné à supporter le bras arrière (19) de manière pivotante est suspendu au cadre principal (4), et le capteur de gaz d'échappement (25) est placé au-dessus du pivot (17).

9. véhicule selon la revendication 7 ou 8, dans lequel il est prévu un amortisseur (15) qui relie le cadre principal (4) et le bras arrière (19), et dans lequel le capteur de gaz d'échappement (25) est placé devant l'amortisseur.

10. véhicule selon l'une des revendications 1 à 9, comprenant par ailleurs une bavette garde-boue (26) devant une roue arrière (18), le capteur de gaz d'échappement (25) étant placé devant ladite bavette.

11. véhicule selon l'une des revendications 1 à 10, dans lequel le capteur de gaz d'échappement (25) est constitué par un capteur d'oxygène.
